# EUROPÄISCHE PATENTSCHRIFT

(11) **EP 3 113 372 B1**
(45) Veröffentlichungstag und Bekanntmachung des Hinweises auf die Patenterteilung: **16.09.2020**
(21) Anmeldenummer: 16176948.4
(22) Anmeldetag: 29.06.2016
(51) Int. Cl.: H04B 1/3827, H02J 50/10, H01Q 1/24

(54) **VORRICHTUNG ZUM ABSCHIRMEN UND UMWANDELN DER ENERGIE EINES ELEKTROMAGNETISCHEN FELDS**
DEVICE FOR SHIELDING AND CONVERTING THE ENERGY OF AN ELECTROMAGNETIC FIELD
DISPOSITIF D'ISOLATION ET DE TRANSFORMATION DE L'ENERGIE D'UN CHAMP ELECTROMAGNETIQUE

(30) Priorität: 03.07.2015 DE 102015110771
(43) Veröffentlichungstag der Anmeldung: 04.01.2017
(73) Patentinhaber: BDM Innovative GmbH, 81677 München (DE)
(72) Erfinder: MEHLHORN, Johannes, 80805 München (DE)
(74) Vertreter: Zimmermann & Partner Patentanwälte mbB

(56) Entgegenhaltungen:
- US-A1- 2014 247 547
- US-A1- 2014 262 474
- US-B1- 6 341 217
- US-B1- 8 270 929

## Beschreibung

### Hintergrund der Erfindung

Die vorliegende Erfindung betrifft eine Vorrichtung zum Abschirmen und Umwandeln der Energie eines elektromagnetischen Felds. Ferner betrifft die Erfindung ein Mobilfunkgerät mit einer Vorrichtung zum Abschirmen und Umwandeln der Energie eines elektromagnetischen Felds.

### Stand der Technik

Mobilfunkgeräte, insbesondere Mobiltelefone und dergleichen, weisen neben ihren Einrichtungen zum Herstellen und Aufrechterhalten einer Hochfrequenz-Funkverbindung auch Elemente auf, welche verschiedenen Teilen des Körpers einer Bedienperson während des Betriebs notwendigerweise zugewandt sind.

Ein Beispiel für ein derartiges Element ist ein kombiniertes Anzeige- und Bedienelement, z. B. ein berührungsempfindlicher Bildschirm (Touchscreen). Der Bildschirm ist während der Bedienung dem Gesicht der Bedienperson insoweit zugewandt, als sie für die Bedienung notwendige Informationen auf dem Bildschirm ablesen muss und/oder dort angezeigte Inhalte konsumiert.

Ein weiteres Beispiel für solche Elemente sind auch der Mikrofoneingang sowie der Ohrlautsprecher-Ausgang, welche es erforderlich machen, dass sie während eines Telefongesprächs mit einem als Mobiltelefon ausgebildetes Mobilfunkgerät dem Kopf der Bedienperson zugewandt sind und/oder sehr nahe an diesen herangeführt werden.

Die Hochfrequenz-Funkverbindung ist zum Betrieb eines Mobilfunkgeräts unerlässlich, setzt aber voraus, dass während eines Sendebetriebs des Mobilfunkgeräts hochfrequente elektromagnetische Energie von der Mobilfunkantenne des Mobilfunkgeräts abgestrahlt wird. Um eine stabile Verbindung auch mit weiter entfernt gelegenen Gegenstellen (Mobilfunk-Basisstationen, WLAN-Routern, anderen Mobilfunkgeräten und dergleichen) sicherzustellen, ist die eingesetzte Sendeleistung und damit die Leistungsdichte in unmittelbarer Nähe zu dem Mobilfunkgerät hoch. Vor dem Hintergrund einer Belastung des Körpergewebes einer Bedienperson mit diesen hochfrequenten Wellen ist es wünschenswert, die im Gewebe der Bedienperson umgesetzte Energie möglichst niedrig zu halten.

Aus dem Stand der Technik sind Vorrichtungen bekannt, welche auf die Vorderseite eines Mobilfunkgeräts - beispielsweise auf den berührungsempfindlichen Bildschirm - aufgebracht werden und einen Teil des elektromagnetischen Feldes abschirmen. Die US 2014/0262474 A1 offenbart beispielsweise eine HF-Abschirmvorrichtung für ein Mobilfunkgerät. Die bekannte herkömmliche Vorrichtung weist eine Mehrzahl von Schichten auf, welche teils transparent und teils mit einer Leiterbahnstruktur versehen sind. Sich kreuzende Leiterbahnen der Leiterbahnstruktur bilden ein Gitter und sind an Kreuzungspunkten miteinander verbunden. Die herkömmliche Vorrichtung ermöglicht eine teilweise Abschirmung der elektromagnetischen Welle, die sich in Richtung der Bedienperson ausbreitet.

Ein Großteil der Abschirmung erfolgt bei der herkömmlichen Vorrichtung durch Reflexion der elektromagnetischen Welle. Gemäß einigen Aspekten der vorliegenden Erfindung soll eine Vorrichtung angegeben werden, welche die Energie aus der sich in Richtung der Bedienperson ausbreitenden elektromagnetischen Welle zumindest teilweise nutzbar macht.

Das Dokument US 2014/0247547 A1 zeigt ein portables Endgerät, das ein Fensterelement inklusive einem Bildschirmbereich und einer Einfassung aufweist. Ein Anzeigemodul ist an einer Innenfläche des Fensterelements angeordnet. Eine resonante Antenne eines Empfangsteils ist an der Innenfläche des Fensterelements angeordnet und an der Einfassung befestigt. Die Antenne ist parallel zu drei Seiten des Anzeigemoduls ausgerichtet.

Das Dokument US 8,270,929 B1 zeigt eine RF-Abschirmungseinrichtung zur Anwendung an Mobilgeräten. Sie weist ein RF-blockierendes Bildschirmmaterial auf, das dazu konfiguriert ist, eine vordere Fläche des Mobilgeräts zu bedecken.

Das Dokument US 6,341,217 B1 zeigt ein tragbares Telefon, das eine Antennenstruktur hat, die abgestrahlte Energie weg von dem Kopf einer Bedienperson führt. Eine Antenne an einem externen Anschluss ist innerhalb einer Hülle für das tragbare Telefon angeordnet. Eine geerdete metallische Fläche ist zwischen der Antenne und dem Kopf der Bedienperson angeordnet. Die metallische Fläche ist um eine Viertelwellenlänge beabstandet von dem strahlenden Element der Antenne angeordnet.

### Zusammenfassung der Erfindung

Die Aufgabe wird zumindest teilweise durch die Vorrichtung zum Abschirmen und Umwandeln von Energie eines elektromagnetischen Felds gemäß Anspruch 1 und durch ein Mobilfunkgerät mit einer Vorrichtung zum Abschirmen und Umwandeln von Energie gemäß Anspruch 10 gelöst. Weitere Aspekte, Details, Ausführungsformen und Vorteile ergeben sich aus den Unteransprüchen, der Beschreibung und den Figuren.

Gemäß einem Aspekt der Erfindung wird eine Vorrichtung zum Abschirmen und Umwandeln von Energie eines elektromagnetischen Felds angegeben, mit einer Antenne zum Empfangen von HF-Energie aus einem elektromagnetischen Feld, und mit einer mit der Antenne elektrisch verbundenen Energie-Umwandlungseinrichtung zum Umwandeln der empfangenen HF-Energie, wobei die Antenne der Vorrichtung dazu ausgebildet ist, an der Vorderseite eines Mobilfunkgeräts angeordnet zu werden.

Die Energie-Umwandlungseinrichtung und die Antenne sind technisch zumindest insofern voneinander separiert, als dass sie nicht ein- und dieselbe technische Einrichtung sind. Insbesondere wird die Energie-Umwandlungseinrichtung nicht durch die Antenne selbst gebildet, sondern ist als eine weitere Komponente der Vorrichtung ausgebildet.

Gemäß einem weiteren Aspekt der Erfindung wird ein Mobilfunkgerät mit einer hierin beschriebenen Vorrichtung zum Abschirmen und Umwandeln von Energie eines elektromagnetischen Felds angegeben, wobei die Vorrichtung zum Abschirmen und Umwandeln von Energie des elektromagnetischen Felds an der Vorderseite des Mobilfunkgeräts angeordnet ist. Insbesondere bedeckt die Antenne die Vorderseite des Mobilfunkgeräts im Wesentlichen vollständig.

Unter der Vorderseite des Mobilfunkgeräts wird diejenige Seite verstanden, welche einer Bedienperson zumindest während eines Betriebsmodus des Mobilfunkgeräts zugewandt ist. Die Vorderseite des Mobilfunkgeräts kann zumindest in Teilbereichen eine Anzeigeeinrichtung und/oder Bedienelemente aufweisen. Die Anzeigeeinrichtung und die Bedienelemente können auch in einem berührungsempfindlichen Bildschirm zusammengefasst sein.

Der Betriebsmodus ist ein Modus, in welchem die Bedienperson mit dem Mobilfunkgerät interagiert. Beispiele für eine solche Interaktion sind eine Bedienung eines berührungsempfindlichen Bildschirms des Mobilfunkgeräts, ein Lesen auf einem Bildschirm des Mobilfunkgeräts, ein Heranführen und Halten des Mobilfunkgeräts in die Nähe des Ohres und/oder in die Nähe des Mundes zum Durchführen von Sprachtelefonie oder dergleichen. Der Betriebsmodus kann auch mehrere dieser oder weiterer Beispiele umfassen.

Die Vorderseite des Mobilfunkgeräts liegt zumindest während des Betriebsmodus zwischen dem Benutzer und der Mobilfunkantenne des Mobilfunkgeräts. Das Mobilfunkgerät ist beispielsweise ein schnurloses Telefon, ein Mobiltelefon, ein mobiler Computer mit Anzeigefläche (Notebook, Tablet-Computer, Convertible) oder dergleichen. Die Mobilfunkantenne ist eine Betriebsantenne des Mobilfunkgeräts, beispielweise eine Antenne zum Herstellen einer Verbindung mit einer Gegenstelle wie z. B. mit einer Mobilfunk-Basisstation eines öffentlichen Netzanbieters (GSM, UMTS, LTE oder dergleichen) oder mit einer Basisstation eines privaten Netzes (WLAN, Bluetooth, DECT-Basisstation oder dergleichen). Zum Herstellen und Aufrechterhalten der Verbindung mit der Gegenstelle wird der Mobilfunkantenne HF-Energie aus einem HF-Schaltungsteil des Mobilfunkgeräts zugeführt, wobei die HF-Energie von der Mobilfunkantenne als sich ausbreitendes elektromagnetisches Feld, also als elektromagnetische Welle, zumindest teilweise auch in Richtung der Vorderseite des Mobilfunkgeräts abgestrahlt wird.

Die abgestrahlte elektromagnetische Welle breitet sich in Richtung der an der Vorderseite des Mobilfunkgeräts angeordneten Vorrichtung zum Abschirmen und Umwandeln von Energie des elektromagnetischen Felds aus und trifft unter anderem auch auf deren Antenne. In der Antenne der Vorrichtung wird durch die auftreffende elektromagnetische Welle eine elektrische Spannung induziert. Durch die elektrische Verbindung mit der Antenne fließt ein sich aus diesem Potenzial ergebender elektrischer Strom in die Energie-Umwandlungseinrichtung und wird dort umgesetzt. Die Anordnung der Antenne der Vorrichtung an der Vorderseite des Mobilfunkgeräts, mit welchem die Vorrichtung verwendbar ist, zusammen mit der Umsetzung der empfangenen Energie aus der sich in Richtung der Bedienperson ausbreitenden elektromagnetischen Welle, führt bei Ausführungsformen der Erfindung zu einer Verringerung der Leistungsdichte der elektromagnetischen Welle in Richtung der Bedienperson.

Bei Ausführungsformen der Erfindung weist die Vorrichtung ein erstes Vorrichtungsteil, welches die Energie-Umwandlungseinrichtung zumindest teilweise aufnimmt, sowie ein zweites Vorrichtungsteil auf, welches die Antenne zumindest teilweise aufnimmt. Die Vorrichtung dieser Ausführungsformen ist demnach zweiteilig ausgebildet. Bevorzugt nimmt das erste Vorrichtungsteil Elektronikbauteile der Energie-Umwandlungseinrichtung auf.

Bei Weiterbildungen dieser Ausführungsform nimmt das erste Vorrichtungsteil die Energie-Umwandlungseinrichtung im Wesentlichen vollständig auf. Alternativ oder zusätzlich nimmt bei Weiterbildungen dieser Ausführungsform das zweite Vorrichtungsteil die Antenne im Wesentlichen vollständig auf.

Das erste Vorrichtungsteil ist insbesondere weitgehend formstabil ausgebildet, insbesondere klemmbar bzw. einrastbar auf einem Mobilfunkgerät im Sinne einer clip-to-fit-Befestigung. Das erste Vorrichtungsteil kann auch als weitgehend formstabile Platine ausgebildet sein. Bei Ausführungsformen verleiht das erste Vorrichtungsteil der gesamten Vorrichtung eine zumindest dahingehend ausreichende Stabilität, dass die Vorrichtung bei regulärem Umgang beschädigungsfrei handhabbar ist, insbesondere bei regulärem Umgang an der Vorderseite eines Mobilfunkgeräts beschädigungsfrei anbringbar ist.

Bei Ausführungsformen nimmt das erste Vorrichtungsteil Elektronikbauteile der Energie-Umwandlungseinrichtung auf. Das erste Vorrichtungsteil kann gedruckte Leiterbahnen und/oder gedruckte passive Komponenten aufweisen, insbesondere gedruckte induktive oder kapazitive Elemente wie z. B. eine Induktivität oder eine Kapazität in Streifenleitertechnik. Alternativ oder zusätzlich zu diesen passiven Elementen kann das erste Vorrichtungsteil aber auch aktive Bauteile aufweisen, wie z. B. Halbleiter-Bauelemente. Halbleiter-Bauelemente können an dem ersten Vorrichtungsteil befestigt und mit den Leiterbahnen und dergleichen mittels bekannter Verfahren elektrisch kontaktiert sein. Insbesondere ist eine einfache Anordnung und betriebsmäßige Kontaktierung nichtdruckbarer Schaltungsbestandteile wie z. B. Schaltungselektronik im bzw. am ersten Vorrichtungsteil möglich.

Das zweite Vorrichtungsteil ist insbesondere als Platine oder als Folie ausgebildet. Bei Ausführungsformen ist ein als Folieausgebildetes Vorrichtungsteil zumindest teilweise aus einer Polyimidfolie oder einer Polyesterfolie gebildet. Durch Variation der Dicke, d. h. der Stärke, der Folie kann ein Verhältnis ihrer Transparenz zu ihrer mechanischen Stabilität eingestellt werden. Typischerweise wird die Stärke der Folie eines als Folie ausgebildeten ersten Vorrichtungsteils so gewählt, dass eine ausreichende mechanische Stabilität gewährleistet ist, welche eine gute Handhabbarkeit des ersten Vorrichtungsteils ermöglicht und gleichzeitig die Montage und Kontaktierung von Elektronikbauteilen hierauf erlaubt. Analog hierzu wird typischerweise die Stärke der Folie eines als Folie ausgebildeten zweiten Vorrichtungsteils so gewählt, dass eine gute Transparenz gewährleistet ist.

Bei Ausführungsformen weist die Antenne eine leitfähige Struktur mit mindestens einer ersten Leiterbahn und mit mindestens einer zweiten Leiterbahn auf. Die erste Leiterbahn und die zweite Leiterbahn weisen mindestens einen Verbindungspunkt auf. Unter dem hier verwendeten Begriff "Verbindungspunkt" wird auch ein Verbindungsbereich mit endlicher Ausdehnung verstanden. Die erste Leiterbahn und die zweite Leiterbahn fallen zumindest nicht vollständig zusammen; typischerweise verlaufen die erste Leiterbahn und die zweite Leiterbahn derart, dass sie sich an einer oder mehreren Stellen kreuzen, z. B. unter einem Winkel in einem Bereich von ca. 30° bis ca. 150°, bevorzugt unter einem Winkel von ca. 80° bis ca. 100°.

Typischerweise verlaufen die erste Leiterbahn und die zweite Leiterbahn näherungsweise in einer Ebene, beispielsweise in einer Ebene, welche bei Anordnung der Vorrichtung an der Vorderseite des Mobilfunkgeräts zumindest teilweise parallel zu der Vorderseite des Mobilfunkgeräts verläuft.

Bei Ausführungsformen verläuft eine Mehrzahl von ersten Leiterbahnen gleichsinnig in einer Ebene, beispielsweise parallel zueinander, und eine Mehrzahl von zweiten Leiterbahnen verläuft ebenfalls gleichsinnig in der Ebene und ebenfalls beispielsweise parallel zueinander. Die Mehrzahl von ersten Leiterbahnen und die Mehrzahl von zweiten Leiterbahnen können derart verlaufen, dass sie ein Gitter ausbilden, wobei die Mehrzahl von ersten Leiterbahnen und die Mehrzahl von zweiten Leiterbahnen in einigen oder in allen ihrer Kreuzungspunkte miteinander verbunden sind.

Die Ebene ist nicht derart streng mathematisch aufzufassen, dass sie senkrecht zu ihrer Aufspannrichtung keinerlei Ausdehnung aufweist. Vielmehr ist die Ebene ausreichend dünn, um eine flächige Anordnung der Leiterbahnen zu erlauben. Es ist beispielsweise auch möglich, dass die Mehrzahl von ersten Leiterbahnen in oder auf einer ersten Lage einer Leiterplatte, beispielsweise einer flexiblen Leiterplatte, ausgebildet ist, und dass die Mehrzahl von zweiten Leiterbahnen in oder auf einer zweiten Lage der Leiterplatte ausgebildet ist. Die Leiterbahnen können dann beispielsweise mittels Durchkontaktierungen (Vias) in einem oder in mehreren Kreuzungspunkten miteinander verbunden sein.

Die Ausbildung der Antenne mit einer leitfähigen Struktur, die mindestens eine erste Leiterbahn und mindestens eine zweite Leiterbahn aufweist, kann dazu beitragen, dass die Aufnahme und die Umwandlung von HF-Energie aus der sich in Richtung der Bedienperson ausbreitenden elektromagnetischen Welle verbessert wird. Insbesondere kann eine Ausbildung der Antenne mit einer leitfähigen Struktur, deren Mehrzahl von ersten Leiterbahnen und deren Mehrzahl von zweiten Leiterbahnen so verlaufen, dass sie ein Gitter ausbilden, zu einer verbesserten Aufnahme und Umwandlung von HF-Energie führen, so dass die Leistungsdichte in Richtung der Bedienperson wirksam reduziert wird.

Bei Ausführungsformen weist die Energie-Umwandlungseinrichtung mindestens ein Elektronikbauteil, insbesondere mindestens eine Halbleiterdiode und/oder einen Transistor und/oder einen Kondensator auf.

Das mindestens eine Elektronikbauteil kann eine Gleichrichterkomponente aufweisen, beispielsweise eine in Halbleitertechnologie ausgebildete Diodenschaltung, vorzugsweise eine Brücken-Gleichrichterschaltung. Eine Gleichrichterkomponente kann dazu beitragen, mit der umgewandelten Energie eine Energiespeicherkomponente zu laden, beispielsweise einen Kondensator oder dergleichen. Ein der Gleichrichterkomponente nachgeschalteter Kondensator kann auch als Glättungskondensator für die gleichgerichtete Spannung dienen. Die gleichgerichtete Spannung kann zum Speisen weiterer Komponenten verwendet werden. Beispiele für solche weiteren Elektronikkomponenten sind Spannungsregler, Leuchtdioden oder integrierte Schaltungen im weiteren Sinne.

Das Elektronikbauteil ist typischerweise auf ein oder mehrere Frequenzbänder abgestimmt, für welche eine Energieumwandlung der empfangenen elektromagnetischen Welle vorgenommen werden soll. Beispielsweise ist das Elektronikbauteil für das GSM-900-Band und/oder für das GSM-1800-Band und/oder für ein oder mehrere UMTS-Bänder. Es ist auch möglich, pro Frequenzband, für welches eine Abschirmung erfolgen soll, ein abgestimmtes Elektronikbauteil vorzusehen.

Bei Ausführungsformen ist die Energie-Umwandlungseinrichtung dazu ausgebildet, zumindest einen Teil der von der leitfähigen Struktur zugeführten elektrischen Energie einer Ladeeinrichtung zum Laden eines Energiespeichers zuzuführen, vorzugsweise einer Akkumulator-Ladeeinrichtung zum Laden des Akkumulators des Mobilfunkgerätes.

Die Ladeeinrichtung kann ein Teil der Vorrichtung zum Abschirmen und Umwandeln der Energie des elektromagnetischen Felds sein, insbesondere ein Teil der Energie-Umwandlungseinrichtung. Die Ladeeinrichtung kann aber auch ein Teil des Mobilfunkgeräts sein, und die Energie-Umwandlungseinrichtung ist dazu ausgebildet, dem Mobilfunkgerät die umgewandelte Energie als elektrischen Strom zuzuführen, so dass das Mobilfunkgerät mittels seiner Ladeeinrichtung die Energie zum Laden nutzen kann. Typischerweise ist die Ladeeinrichtung eine Akkumulator-Ladeeinrichtung zum Laden des Akkumulators des Mobilfunkgeräts. Die Zuführung kann mittels einer Zuleitung erfolgen; typischerweise ist die Vorrichtung zum Abschirmen und Umwandeln der Energie des elektromagnetischen Felds mit einer Anschlussbuchse oder dergleichen versehen, und mittels der Zuleitung kann eine Verbindung zwischen der Anschlussbuchse der Vorrichtung und einer Ladebuchse des Mobilfunkgeräts hergestellt werden. Durch eine Umwandlung der Energie in einen elektrischen Strom, der eine Ladeeinrichtung speist, ist eine wirkungsvolle Verringerung der Leistungsdichte der elektromagnetischen Welle in Richtung der Bedienperson möglich.

Bei Ausführungsformen ist die Energie-Umwandlungseinrichtung dazu ausgebildet, zumindest einen Teil der von der Gitterstruktur leitfähigen Struktur zugeführten elektrischen Energie in Wärme und/oder in sichtbares Licht umzuwandeln. Eine derartige Umwandlung zumindest von Teilen der elektrischen Energie in Wärme und/oder in sichtbares Licht kann alternativ oder zusätzlich zum Zuführen zumindest eines Teils der Energie zu der Ladeeinrichtung erfolgen.

Durch eine Umwandlung in Wärme ist eine wirkungsvolle Verringerung der Leistungsdichte der elektromagnetischen Welle in Richtung der Bedienperson möglich, ebenso wie oben im Zusammenhang mit dem Zuführen zu der Ladeeinrichtung beschrieben.

Alternativ oder zusätzlich zu der Umwandlung in Wärme ist es auch möglich, dass die Energie-Umwandlungseinrichtung die Energie in sichtbares Licht umwandelt, d. h. wiederum in eine elektromagnetische Welle, deren Frequenz jedoch in einem sehr viel höheren Frequenzbereich liegt als diejenige der elektromagnetischen Welle, welche mit der Antenne der Vorrichtung empfangen wurde. Die Eindringtiefe von (sichtbarem) Licht in organisches Gewebe, beispielsweise in das Körpergewebe der Bedienperson hinein, ist deutlich geringer als die Eindringtiefe von elektromagnetischen Wellen auf der Frequenz, die üblicherweise für die Funkkommunikation zwischen dem Mobilfunkgerät und beispielsweise einer Basisstation oder einem anderen Mobilfunkgerät zum Einsatz kommt. Wiederum ist dadurch eine wirkungsvolle Verringerung der Leistungsdichte der elektromagnetischen Welle in Richtung der Bedienperson möglich, welche für eine solche Funkkommunikation verwendet wird. Die Energie-Umwandlungseinrichtung kann zur Umwandlung in sichtbares Licht beispielsweise eine Leuchtdiode aufweisen.

Bei Ausführungsformen weist die Energie-Umwandlungseinrichtung eine Umschalteinrichtung auf, welche dazu ausgebildet ist, in Abhängigkeit von einem vorab festgelegten oder festlegbaren Kriterium selektiv ein Umwandeln zumindest eines Teils der von der leitfähigen Struktur zugeführten elektrischen Energie in Wärme und/oder in sichtbares Licht und ein Zuführen zumindest eines Teils der von der leitfähigen Struktur zugeführten elektrischen Energie zu einer Ladeeinrichtung durchzuführen.

Die Umschalteinrichtung kann insbesondere anhand des Kriteriums wechselweise zwischen einer Energieumwandlung in Wärme und/oder in sichtbares Licht (einem ersten Betriebsmodus) und einem Zuführen der Energie zu einer Ladeeinrichtung (einem zweiten Betriebsmodus) umschalten. Das Umwandeln in Wärme und/oder in sichtbares Licht, wie auch das Zuführen zu der Ladeeinrichtung kann dabei jeweils wie oben beschrieben erfolgen. Das Kriterium gibt typischerweise an, ob oder ob nicht die pro Zeiteinheit zur Verfügung stehende Energie für einen Ladevorgang geeignet ist. In der Regel wird für einen Ladevorgang, d. h. für ein zumindest zeitweises Zuführen von ausreichend Energie zu der Ladeeinrichtung, pro Zeiteinheit mehr Energie benötigt als für eine Umwandlung in Wärme und/oder in sichtbares Licht. Je nach momentan zur Verfügung stehender Energie kann dann anhand des Kriteriums zwischen den beiden Betriebsmodi umgeschaltet werden.

Das Kriterium kann vorab festgelegt sein und insbesondere einen Schwellenwert oder einen Wertebereich darstellen, ab welchem der Ladeeinrichtung Energie zugeführt wird, bei gegebener Leistungsaufnahme der Ladeeinrichtung. Unterhalb des Schwellenwerts oder des Wertebereichs kann die hierin beschriebene Umwandlung in Wärme und/oder in sichtbares Licht erfolgen. Der Schwellenwert bzw. der Wertebereich kann beispielsweise ein Spannungspegel oder eine Stromstärke sein, und der Momentanwert der von der Energie-Umwandlungseinrichtung ausgebbaren Spannung kann mit Hilfe eines Sensors erfasst werden und mit dem Schwellenwert verglichen werden. Das Kriterium kann auch im Betrieb festlegbar sein, beispielsweise bei wechselnder minimal erforderlicher Leistungsaufnahme der Ladeeinrichtung.

Bei Ausführungsformen weist die Energie-Umwandlungseinrichtung eine Modulationseinrichtung auf, welche dazu ausgebildet ist, die Intensität des sichtbaren Lichts in Abhängigkeit von einem vorab festgelegten oder festlegbaren Kriterium einzustellen. Das Kriterium ist typischerweise als Überschreitung oder Unterschreitung eines Schwellwerts oder Wertebereichs festgelegt bzw. festlegbar. Beispielsweise ist der Schwellenwert bzw. der Wertebereich ein Spannungspegel, welcher momentan eingangsseitig an der Energie-Umwandlungseinrichtung anliegt und mittels eines Spannungssensors gemessen wird. Der Spannungspegel erlaubt einen Rückschluss auf die Feldstärke und damit eine Möglichkeit für einen Rückschluss darauf, ob das Mobilfunkgerät momentan mit einer Gegenstelle in Funkverbindung steht. Wenn das Mobilfunkgerät ein Mobiltelefon ist, ist es so beispielsweise möglich, die Intensität des sichtbaren Lichts zu verändern, insbesondere zu erhöhen, wenn ein Anruf eingeht oder dergleichen. Eine veränderliche Intensität des sichtbaren Lichts kann dazu beitragen, die Aufmerksamkeit der Bedienperson zu lenken.

Bei Ausführungsformen ist die Vorrichtung programmierbar ausgebildet; insbesondere ist das mindestens eine Elektronikbauteil programmierbar ausgebildet. Die Vorrichtung kann eine Programmierschnittstelle aufweisen, welche typischerweise von extern kontaktierbar ausgebildet ist. Die Programmierbarkeit kann sich z. B. auf Funktionen der Vorrichtung erstrecken, z. B. auf eine Vorgabemöglichkeit für das hierin beschriebene Kriterium, wonach selektiv ein Umwandeln zumindest eines Teils der von der leitfähigen Struktur zugeführten elektrischen Energie in Wärme und/oder in sichtbares Licht und ein Zuführen zumindest eines Teils der von der leitfähigen Struktur zugeführten elektrischen Energie zu einer Ladeeinrichtung erfolgt. Die Programmierbarkeit kann sich z. B. alternativ oder zusätzlich auch auf den hierin beschriebenen Modulationsgrad zur Variation der Intensität erstrecken.

Bei Ausführungsformen ist die Vorrichtung zum Abschirmen und Umwandeln der Energie des elektromagnetischen Felds flächig ausgebildet. Alternativ oder zusätzlich weist die Vorrichtung eine adhäsive Schicht zum Befestigen an der Vorderseite des Mobilfunkgeräts auf. Die Vorrichtung ist typischerweise insbesondere mit einer Klebefläche, vorzugsweise mit einer selbstklebend ausgebildeten Klebefläche versehen. Dies ist insbesondere dann bevorzugt, wenn die Vorrichtung zum Nachrüsten eines bestehenden Mobilfunkgeräts vorgesehen ist. Typischerweise ist die mit einer Klebefläche versehene Vorrichtung selbst weitgehend flächig bzw. eben ausgebildet und mit einer Vielzahl von unterschiedlichen Typen von Mobilfunkgeräten verwendbar. Die mit einer Klebefläche versehene Vorrichtung kann eine Positionierungshilfe aufweisen, beispielsweise eine optische Markierung zur zentrierten Positionierung an der Vorderseite des Mobilfunkgeräts.

Um eine gewünschte Form (Passform) für einen bestimmten Typ von Mobilfunkgerät zu erzielen, kann die Vorrichtung so ausgebildet sein, dass die zur Abschirmung und/oder Umwandlung notwendigen Komponenten, d. h. in erster Linie die Antenne und die Energie-Umwandlungseinrichtung, in einem zentralen Bereich der Vorrichtung ausgebildet sind. Bei Ausbildung der Komponente auf einer Leiterplatte oder mehreren Leiterplatten, z. B. Folien, ist es typischerweise vorgesehen, dass sich die Folien über den zentralen Bereich hinaus erstrecken, so dass durch Anpassung der Form ein bündiger Abschluss mit der Vorderseite des Mobilfunkgeräts erzielt werden kann. Eine Anpassung der Form kann insbesondere durch Zuschneiden im peripheren Bereich der Folie erfolgen.

Die Erfindung ist jedoch nicht auf eine flächige Ausbildung der Vorrichtung zum Abschirmen und Umwandeln der Energie des elektromagnetischen Felds beschränkt. Beispielsweise kann die Vorrichtung, insbesondere das erste Vorrichtungsteil, Bereiche aufweisen, welche über die Kanten der Vorderseite des Mobilfunkgeräts hinausragen und umgebogen sind, so dass ein Überziehen und Befestigen an den Kanten bzw. an den Seitenflächen des Mobilfunkgeräts möglich wird. Die Vorrichtung, insbesondere das erste Vorrichtungsteil, kann auch hüllenartig ausgebildet sein und dazu ausgelegt sein, das Mobilfunkgerät teilweise oder vollständig zu umhüllen.

### Kurze Beschreibung der Figuren

Nachstehend werden Ausführungsformen der Erfindung anhand einer Zeichnung näher erläutert.

In den Zeichnungen zeigen:
Fig. 1 eine schematische perspektivische Explosionsansicht einer Vorrichtung zum Abschirmen und Umwandeln der Energie des elektromagnetischen Felds gemäß einer ersten Ausführungsform der Erfindung;
Fig. 2 eine schematische Draufsicht auf die Unterseite der Vorrichtung gemäß der ersten Ausführungsform aus Fig. 1;
Fig. 3 eine schematische perspektivische Ansicht der Vorrichtung gemäß der ersten Ausführungsform aus Fig. 1 und ein Mobilfunkgerät, an welchem die Vorrichtung verwendet werden kann;
Fig. 4 eine schematische perspektivische Explosionsansicht einer Vorrichtung zum Abschirmen und Umwandeln der Energie des elektromagnetischen Felds gemäß einer zweiten Ausführungsform der Erfindung; und
Fig. 5 eine schematische perspektivische Explosionsansicht einer Vorrichtung zum Abschirmen und Umwandeln der Energie des elektromagnetischen Felds gemäß einer dritten Ausführungsform der Erfindung.

### Beschreibung der Ausführungsformen

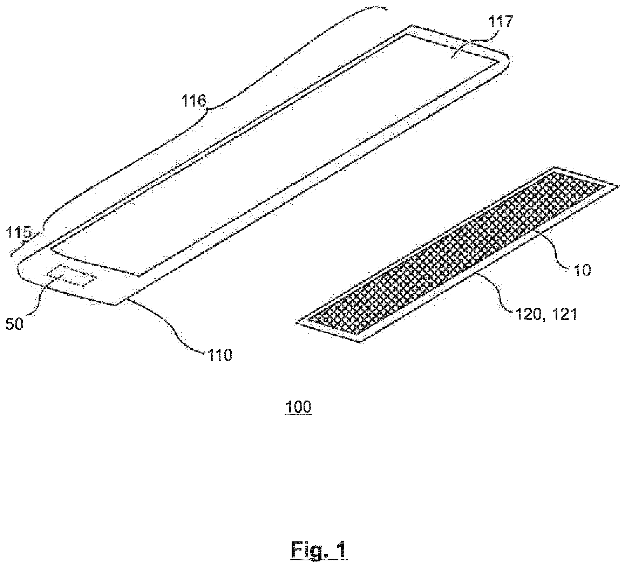

Fig. 1 ist eine schematische perspektivische Explosionsansicht einer Vorrichtung 100 zum Abschirmen und Umwandeln der Energie des elektromagnetischen Felds gemäß einer ersten Ausführungsform der Erfindung. Die Vorrichtung weist ein erstes Vorrichtungsteil 110 auf, welches in der dargestellten Ausführungsform als Rahmenteil ausgebildet ist, welches sich hauptsächlich in einer Ebene erstreckt und in der dazu senkrechten Dickenrichtung nur eine geringe Ausdehnung aufweist. Das Rahmenteil ist zumindest teilweise aus einem stabilen Leiterplattenmaterial gebildet.

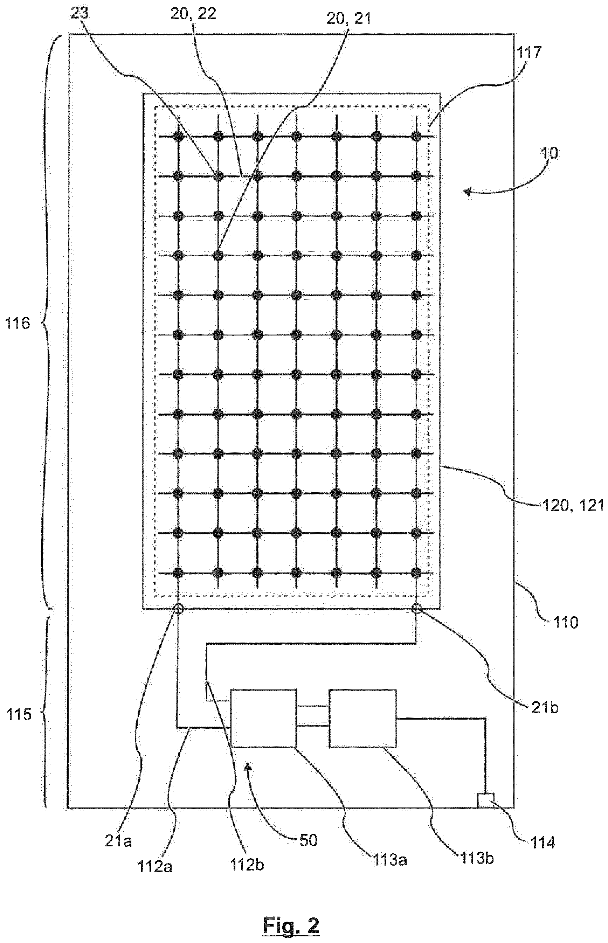

In einem ersten Bereich 115 ist eine Energie-Umwandlungseinrichtung 50 ausgebildet, welche später im Zusammenhang mit Fig. 2 noch näher erläutert wird. Die Energie-Umwandlungseinrichtung 50 ist schematisch als Block angedeutet, kann jedoch eine andere Form aufweisen. Ebenso ist es möglich, dass die Energie-Umwandlungseinrichtung 50 zumindest teilweise von dem Rahmen des ersten Vorrichtungsteils 110 verdeckt ist, d. h. dass sie zumindest teilweise an der Unterseite des ersten Vorrichtungsteils 110 angeordnet ist.

Das erste Vorrichtungsteil 110 weist eine Aussparung 117 auf, welche in einem zweiten Bereich 116 vorgesehen ist.

In Fig. 1 ist unterhalb des ersten Vorrichtungsteils 110 ein zweites Vorrichtungsteil 120 dargestellt, welches eine Antenne 10 aufweist, die später noch näher beschrieben wird und die in Fig. 1 lediglich schematisch angedeutet ist. Das zweite Vorrichtungsteil 120 ist gemäß der dargestellten Ausführungsform eine flexible Leiterplatte 121, auf welcher die Antenne 10 in Streifenleitertechnik ausgebildet ist. Das zweite Vorrichtungsteil ist dazu ausgebildet, an dem ersten Vorrichtungsteil 110 befestigt zu werden, so dass es in die Aussparung 117 passt bzw. deren Ränder teilweise überlappt.

Die flexible Leiterplatte 121 des zweiten Vorrichtungsteils 120 ist in der dargestellten Ausführungsform aus einer flexiblen Folie aus Polyimid gebildet. Das Material der Folie ist jedoch nicht auf Polyimid beschränkt, sondern kann z. B. auch einem Polyester wie beispielsweise Polyethylenterephtalat umfassen. Diese flexible Leiterplatte 121 weist eine Transparenz auf, welche gut geeignet ist, um den Inhalt auf einem dahinterliegenden Bildschirm, z. B. einen berührungsempfindlichen Bildschirm, eines später noch zu erläuternden Mobilfunkgeräts erkennen und/oder bedienen zu können.

Die Kombination aus den beiden Vorrichtungsteilen 110, 120 ergibt die Vorrichtung 100 gemäß der ersten Ausführungsform, die an einem Mobilfunkgerät zum Einsatz kommen kann, wie unten erläutert. Für die Kombination der beiden Vorrichtungsteile 110, 120 können übliche Verfahren zum Einsatz kommen, beispielsweise eine adhäsive Fixierung, eine Klemmfixierung oder dergleichen. Eine Kontaktierung zwischen der Antenne 10 des ersten Vorrichtungsteils 110 und der Energie-Umwandlungseinrichtung 50 des zweiten Vorrichtungsteils wird mit üblichen technischen Mitteln hergestellt, bei der ersten Ausführungsform durch eine Klemmverbindung.

Fig. 2 ist eine schematische Draufsicht auf die Unterseite der Vorrichtung gemäß der Ausführungsform aus Fig. 1. In der Darstellung gemäß Fig. 2 ist das zweite Vorrichtungsteil 120 so in die strichpunktiert angedeutete Aussparung 117 des ersten Vorrichtungsteils 110 eingesetzt, dass die Kanten des zweiten Vorrichtungsteils 120 die Aussparung 117 teilweise überlappen. In diesen überlappenden Kantenbereichen ist das zweite Vorrichtungsteil 120 mit dem ersten Vorrichtungsteil 110 verklebt. Diese Verbindung zwischen den beiden Vorrichtungsteilen 110, 120 ist jedoch nur beispielhaft zu verstehen, und andere Verbindungstechniken sind möglich.

Die Antenne 10 des zweiten Vorrichtungsteils 120 der Vorrichtung 100 ist in dem dargestellten Ausführungsbeispiel eine leitfähige Struktur 20, wobei die einzelnen Leiterbahnen 21, 22 der leitfähigen Struktur 20 in Streifenleitungstechnik auf der flexiblen Leiterplatte 121 ausgebildet sind. Die leitfähige Struktur 20 weist in der Darstellung eine Mehrzahl senkrecht verlaufender erster Leiterbahnen 21 und eine Mehrzahl senkrecht verlaufender zweiter Leiterbahnen 22 auf. Die ersten Leiterbahnen 21 verlaufen in äquidistantem Abstand parallel zueinander; analog dazu verlaufen auch die zweiten Leiterbahnen 22 in äquidistantem Abstand parallel zueinander. Die Erfindung ist jedoch nicht auf eine äquidistante Beabstandung der Leiterbahnen 21, 22 und/oder auf einen parallelen Verlauf derselben beschränkt.

Die ersten Leiterbahnen 21 und die zweiten Leiterbahnen 22 kreuzen sich bei der gitterartigen Anordnung der dargestellten Ausführungsform an einer Vielzahl von Punkten. Gemäß der ersten Ausführungsform sind die Leiterbahnen 21, 22 jeweils in jedem der Kreuzungspunkte elektrisch miteinander verbunden. In einem Übergangsbereich zwischen dem ersten Bereich 115 der Vorrichtung 100 und dem zweiten Bereich 116 der Vorrichtung 100 ist eine der ersten Leiterbahnen 21 zu einem ersten Leiterbahnanschluss 21a geführt und mit diesem kontaktiert. Eine weitere der ersten Leiterbahnen 21 ist zu einem zweiten Leiterbahnanschluss 21b geführt und mit diesem kontaktiert. An den Leiterbahnanschlüssen 21a, 21b ist jeweils eine Schaltungs-Leiterbahn 112a bzw. 112b der Energie-Umwandlungseinrichtung 50 angeordnet.

Die ersten Leiterbahnen 21 und die zweiten Leiterbahnen 22 sind derart dünn ausgebildet, dass sie die Transparenz der flexiblen Leiterplatte 121 nicht oder nur unwesentlich beeinträchtigen. Die Benutzung eines dahinterliegenden Bildschirms oder dergleichen wird durch die Leiterbahnen 21, 22 nicht oder nur unwesentlich behindert. Die schließt auch ein, dass eine Bedienung eines als Touchscreen ausgebildeten Bildschirms durch die ersten Leiterbahnen 21 oder die zweiten Leiterbahnen 22 nicht oder nur unwesentlich behindert wird.

Auch ist die Anzahl von jeweiligen ersten Leiterbahnen 21 und zweiten Leiterbahnen 22 nicht auf die Darstellung der Fig. 2 beschränkt, sondern kann variiert werden. Insbesondere ist die Maschenweite eines sich ergebenden Gitters auf die Wellenlängen der elektromagnetischen Wellen angepasst, die sich von einer Mobilfunkantenne eines Mobilfunkgerätes in Richtung der Vorrichtung 100 und damit in Richtung einer Bedienperson ausbreiten, bzw. auf die Wellenlängen derjenigen elektromagnetischen Wellen, deren Energie in der Energie-Umwandlungseinrichtung 50 umgewandelt werden soll. Die Maschenweite ist jedoch auch ausreichend weit gewählt, so dass eine oben beschriebene Touchscreen-Bedienung durch die ersten Leiterbahnen 21 oder die zweiten Leiterbahnen 22 nicht oder nur unwesentlich behindert wird.

Die Schaltungs-Leiterbahnen 112a, 112b führen zu einem Schaltungsteil 113a der Energie-Umwandlungseinrichtung 50, das schematisch als Block dargestellt ist. Das Schaltungsteil 113a gemäß der ersten Ausführungsform ist ein Elektronikbauteil in Form einer Gleichrichterschaltung mit Glättungs- und Pufferkapazität. Das Schaltungsteil 113a wird mit Energie versorgt, welche von der leitfähigen Struktur 20, d. h. der Antenne 10, empfangen und zugeführt wurde. Ausgangsseitig ist das Schaltungsbauteil 113a mit einem weiteren Schaltungsbauteil 113b verbunden, welchem es Energie in Form des gleichgerichteten Stroms zuführt und dieses damit speist.

Das Schaltungsbauteil 113b weist eine integrierte Schaltung auf, welche die eingangsseitig anliegende elektrische Spannung in vorgegebenen Zeitabständen, beispielsweise alle 100 ms, misst. Anhand der gemessenen Spannung entscheidet das Schaltungsbauteil 113b, ob oder ob nicht ein erster Spannungs-Schwellenwert überschritten ist, welcher es erlaubt, eine (in den Fig. 1 bis 3 nicht dargestellte) Leuchtdiode zu speisen, deren Leuchtfläche an die Oberseite der Vorrichtung 100 hinausgeführt ist und einer Bedienperson signalisieren kann, dass Energieanteile einer sich von einem Mobilfunkgerät in ihre Richtung ausbreitenden elektromagnetischen Welle von der Vorrichtung 100 abgeschirmt und umgewandelt wurden.

Wenn diese Bedingung erfüllt ist, legt das Schaltungsbauteil 113b die eingangsseitig anliegende Spannung oder Teile davon an die Leuchtdiode an.

Es ist auch möglich, eine Mehrzahl von Leuchtdioden und/oder flächig ausgebildete Leuchtstrukturen in Leuchtdiodentechnik vorzusehen. Leuchtdioden schließen anorganische oder organische Leuchtdioden (OLEDs) ein. Auch ist es möglich, eine Mehrzahl von Leuchtdioden als Leuchtdiodenmatrix auszubilden. Die einzelnen Leuchtdioden der Leuchtdiodenmatrix können im Sinne einer Miniatur-Anzeigefläche ansteuerbar ausgebildet sein und/oder entsprechend angesteuert werden, beispielsweise mit wechselnden Motiven und/oder Schriften. Die Leuchtdiodenmatrix ist beispielsweise als OLED-Bildschirmmatrix ausgebildet, vorzugsweise als AMOLED. Die Leuchtdiodenmatrix kann dazu ausgebildet sein, eines oder mehrere der Folgenden anzuzeigen: Einen Schriftzug und/oder ansteuerbar verschiedene Schriftzüge; ein Logo und/oder ansteuerbar verschiedene Logos; ein Wappen und/oder ansteuerbar verschiedene Wappen. Die Anzeigen können monochrom oder mehrfarbig ausgebildet sein.

Auch ist es möglich, mit einer oder mehreren Leuchtdioden und/oder mit der Leuchtstruktur oder den Leuchtstrukturen verschiedene Anzeigeformen in Abhängigkeit einer oder mehrerer Zustände des Mobiltelefons anzuzeigen. Die Anzeigeform kann beispielsweise eine Farbcodierung oder ein Farbwechsel sein; alternativ oder zusätzlich kann die Anzeigeform beispielsweise auch als Kodierung einer Blinkfrequenz ausgestaltet sein. Zum Beispiel werden unterschiedliche Farben und/oder unterschiedliche Blinkfrequenzen je nach Art der momentan bestehenden Funkverbindung oder Funkverbindungen angezeigt. Die Art der momentan bestehenden Funkverbindung ist z. B. eine Unterscheidung in GSM-Verbindungen, UMTS-Verbindungen, WLAN-Verbindungen und dergleichen.

Wenn das Schaltungsbauteil 113b feststellt, dass ein zweiter Spannungs-Schwellenwert überschritten wurde, dessen Pegel höher liegt als derjenige des ersten Spannungs-Schwellenwerts, dann führt das Schaltungsbauteil die eingangsseitig anliegende Spannung oder Teile davon einem Anschluss 114 zu. Bei der dargestellten Ausführungsform ist der Anschluss 114 nach außen geführt und stellt eine Möglichkeit zur Verfügung, eine (in Fig. 2 nicht dargestellte) Ladeeinrichtung eines Mobiltelefons zu speisen.

Gemäß der ersten Ausführungsform weist die Vorrichtung 100 keine weitere elektrische Energiequelle wie z. B. eine Batterie auf, sondern speist sich vollständig aus der Energie der empfangenen elektromagnetischen Wellen.

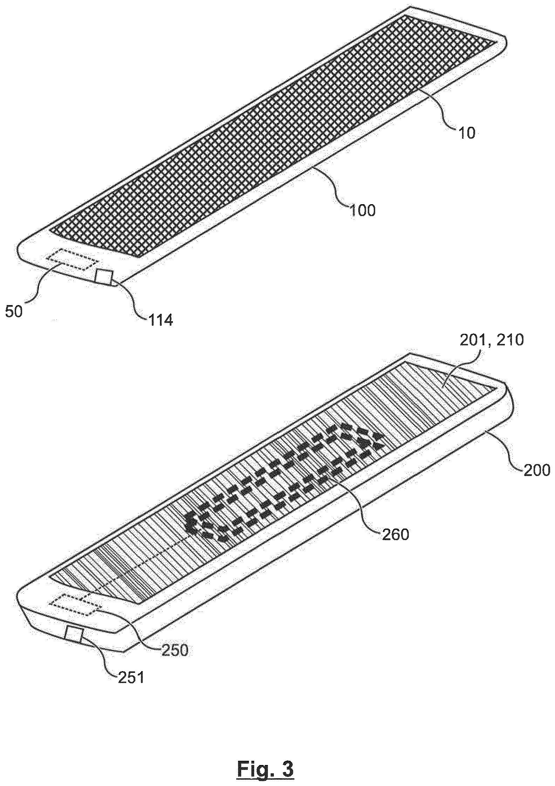

Fig. 3 zeigt eine schematische perspektivische Ansicht der Vorrichtung 100 gemäß der ersten Ausführungsform aus Fig. 1 und ein Mobilfunkgerät 200, an welchem die Vorrichtung verwendet werden kann.

Das unterhalb der Vorrichtung 100 dargestellte Mobilfunkgerät 200 weist an seiner Vorderseite 201 einen Bildschirm 210 auf, der in der dargestellten Ausführungsform als berührungsempfindlicher Bildschirm (Touchscreen) ausgestaltet ist. Ein im Mobilfunkgerät 200 vorhandener Akkumulator 260 ist strichpunktiert angedeutet, ebenso wie dessen elektrische Verbindung mit einer Ladeeinrichtung 250. Die Ladeeinrichtung 250 ist als eine an den Akkumulator 260 angepasste Ladeelektronik ausgebildet und mit einem Anschluss 251 versehen, der typischerweise als genormter Anschluss ausgestaltet ist. Über den Anschluss 251 kann die Ladeeinrichtung 250 mittels einer (nicht dargestellten) Leitung mit dem Anschluss 114 verbunden werden. Wie im Zusammenhang mit Fig. 2 beschrieben, kann bei ausreichender Energieumwandlung mittels der Energie-Umwandlungseinrichtung 50 ein Ladungsvorgang des Akkumulators durch die Ladeeinrichtung erfolgen, wenn diese mit der Energie-Umwandlungseinrichtung verbunden ist. Die Erfindung ist jedoch nicht auf eine derartige (externe) Verbindung beschränkt; vielmehr kann auch eine andere Zuführung der empfangenen und umgewandelten Energie der elektromagnetischen Welle zu der Ladeeinrichtung 250 erfolgen, oder die Ladeeinrichtung kann auch Bestandteil der Vorrichtung 100 sein.

Die Vorrichtung 100 ist an ihrer Unterseite mit einer (nicht dargestellten) adhäsiven Schicht versehen, welche der Befestigung an der Vorderseite 201 des Mobilfunkgeräts 200 dient. Die Befestigung kann jedoch auch mit anderen Mitteln als Kleben erfolgen, beispielsweise durch eine Klemmbefestigung, eine Steckbefestigung oder dergleichen.

Die Vorrichtung 100 wird zur Verwendung an dem Mobilfunkgerät 200 angebracht, so dass die Antenne 10 zumindest während eines Betriebsmodus zwischen der Vorderseite 201 des Mobilfunkgeräts 200 und einer Bedienperson angeordnet ist.

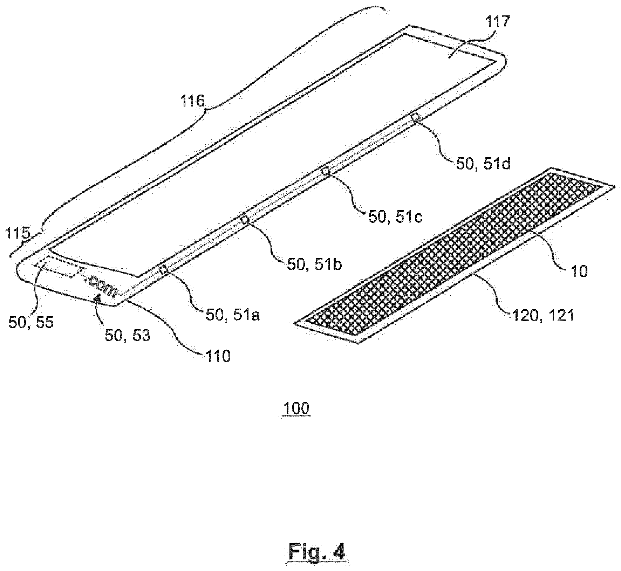

Fig. 4 zeigt eine schematische perspektivische Explosionsansicht einer Vorrichtung 100 zum Abschirmen und Umwandeln der Energie des elektromagnetischen Felds gemäß einer zweiten Ausführungsform der Erfindung. Die Vorrichtung 100 gemäß der zweiten Ausführungsform entspricht in weiten Teilen derjenigen der ersten Ausführungsform.

Wie aus Fig. 4 ersichtlich, sind bei der Vorrichtung 100 gemäß der zweiten Ausführungsform an dem ersten Vorrichtungsteil 110 mehrere Leuchtanzeigen 51a, 51b, 51c, 51d angeordnet, welche in der Ausführungsform aus organischen Leuchtdioden (OLEDs) aufgebaut sind. Das erste Vorrichtungsteil 110 ist bei der dargestellten zweiten Ausführungsform wiederum als Rahmenteil ausgebildet, und die Leuchtanzeigen 51a, 51b, 51c, 51d sind entlang einer Längsseite des Rahmens aufgereiht. Zusätzlich ist ein Leuchtschriftzug 53 vorgesehen, welcher ebenfalls aus OLED-Material ausgebildet ist. Die Leuchtanzeigen 51a, 51b, 51c, 51d und der Leuchtschriftzug 53 sind elektrisch mit einer Schaltungselektronik 55 verbunden, welche deren Ansteuerung vornimmt, was mit einer punktierten Linie in Fig. 4 angedeutet ist.

Gemäß der dargestellten Ausführungsform bilden die Schaltungselektronik 55, die Leuchtanzeigen 51a, 51b, 51c, 51d sowie der Leuchtschriftzug 53 zusammen die Energie-Umwandlungseinrichtung 50.

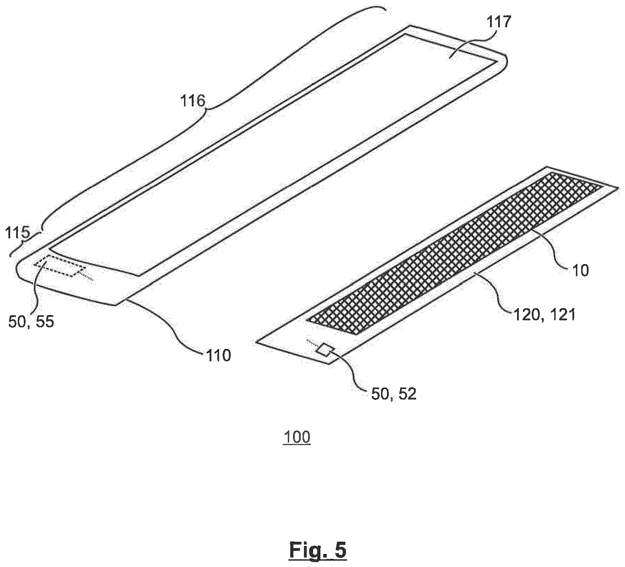

Fig. 5 zeigt eine schematische perspektivische Explosionsansicht einer Vorrichtung 100 zum Abschirmen und Umwandeln der Energie des elektromagnetischen Felds gemäß einer dritten Ausführungsform der Erfindung. Die Vorrichtung 100 gemäß der dritten Ausführungsform entspricht in weiten Teilen derjenigen der ersten oder der zweiten Ausführungsform.

Bei der Vorrichtung 100 gemäß der dritten Ausführungsform ist an dem ersten Vorrichtungsteil 110, das als Rahmenteil ausgebildet ist, eine Schaltungselektronik 55 vorgesehen, welche einen Teil der Energie-Umwandlungseinrichtung 50 bildet. An dem zweiten Vorrichtungsteil 120, das als Folie ausgebildet ist, ist eine Leuchtanzeige 52 vorgesehen, welche als OLED ausgebildet ist und als gedruckte Elektronik auf die Folie aufgebracht wurde.

Im zusammengesetzten Zustand von erstem Vorrichtungsteil 110 und zweitem Vorrichtungsteil 120 wird ein elektrischer Kontakt zwischen der Schaltungselektronik 55 der Energie-Umwandlungseinrichtung 50 und der Leuchtanzeige 52 der Energie-Umwandlungseinrichtung 50 hergestellt, wodurch im Betrieb eine Energie-Umwandlung in sichtbares Licht stattfinden kann. Um die Sichtbarkeit durch die Antenne 10 hindurch auf einen berührungsempfindlichen Bildschirm eines Mobilfunkgeräts und dessen Bedienbarkeit nicht zu beeinträchtigen, ist die Leuchtanzeige 52 in einem Bereich angeordnet, der außerhalb der Bildschirmfläche liegt. Im zusammengesetzten Zustand wird die Leuchtanzeige 52 von einem Bereich des ersten Vorrichtungsteils 110 verdeckt. In diesem Bereich der Leuchtanzeige ist daher das erste Vorrichtungsteil 110 gemäß der dritten Ausführungsform transparent ausgebildet.

Es ist aber auch möglich, z. B. bei einem nicht transparenten ersten Vorrichtungsteil 110 eine entsprechende Aussparung an dieser Position vorzusehen. Weiterhin kann die Leuchtanzeige 52 auch auf einer weiteren transparenten Folie im Bereich der Antenne 10, beispielsweise oberhalb der Antenne 10 dem Benutzer zugewandt, angeordnet sein.

Es ist mit der Vorrichtung 100 gemäß den Ausführungsformen möglich, eine effiziente Abschirmung zumindest von Teilen der elektromagnetischen Welle vorzunehmen, die sich von dem Mobilfunkgerät 200 in Richtung der Vorrichtung und damit in Richtung der Bedienperson ausbreitet, und die empfangene Energie in der Energie-Umwandlungseinrichtung 50 umzuwandeln.

### Bezugszeichenliste

10 Antenne
20 leitfähige Struktur
21 erste Leiterbahn
21a erster Leiterbahnanschluss
21b zweiter Leiterbahnanschluss
22 zweite Leiterbahn
23 elektrischer Verbindungspunkt
50 Energie-Umwandlungseinrichtung
51a, 51b, 51c, 51d Leuchtanzeige
52a Leuchtanzeige
53 Leuchtschriftzug
100 Vorrichtung zum Abschirmen und Umwandeln der Energie eines elektromagnetischen Feldes
110 erstes Vorrichtungsteil
112a, 112b Schaltungs-Leiterbahn
113a, 113b Schaltungsteil
114 Anschluss des ersten Vorrichtungsteils
115 erster Bereich des ersten Vorrichtungsteils
116 zweiter Bereich des zweiten Vorrichtungsteils
117 Aussparung
120 zweites Vorrichtungsteil
121 flexible Leiterplatte
200 Mobilfunkgerät
201 Vorderseite des Mobilfunkgeräts
210 Bildschirm
250 Ladeeinrichtung
251 Anschluss des Mobilfunkgeräts
260 Akkumulator

## Patentansprüche

1. Vorrichtung (100) zum Abschirmen und Umwandeln von Energie eines elektromagnetischen Felds mit:
einer Antenne (10) zum Empfangen von HF-Energie aus einem elektromagnetischen Feld; und
einer mit der Antenne (10) elektrisch verbundenen Energie-Umwandlungseinrichtung (50) zum Umwandeln der empfangenen HF-Energie,
wobei die Antenne (10) der Vorrichtung (100) dazu ausgebildet ist, an der Vorderseite eines Mobilfunkgeräts angeordnet zu werden,
wobei die Antenne (10) eine leitfähige Struktur (20) mit mindestens einer ersten Leiterbahn (21) und mit mindestens einer zweiten Leiterbahn (22) aufweist, wobei die erste Leiterbahn (21) und die zweite Leiterbahn (22) mindestens einen elektrischen Verbindungspunkt (23) aufweisen,
wobei die Energie-Umwandlungseinrichtung (50) dazu ausgebildet ist, zumindest einen Teil der von der leitfähigen Struktur (20) zugeführten elektrischen Energie in Wärme und/oder in sichtbares Licht umzuwandeln.

2. Vorrichtung (100) nach Anspruch 1,
wobei die Energie-Umwandlungseinrichtung (50) eine Umschalteinrichtung aufweist, welche dazu ausgebildet ist, in Abhängigkeit von einem vorab festgelegten oder festlegbaren Kriterium selektiv Folgendes durchzuführen:
a. Umwandeln zumindest eines Teils der von der leitfähigen Struktur (20) zugeführten elektrischen Energie in Wärme und/oder in sichtbares Licht;
b. Zuführen zumindest eines Teils der von der leitfähigen Struktur (20) zugeführten elektrischen Energie zu einer Ladeeinrichtung (250).

3. Vorrichtung (100) nach Anspruch 1 oder 2,
wobei die Energie-Umwandlungseinrichtung (50) eine Modulationseinrichtung aufweist, welche dazu ausgebildet ist, die Intensität des sichtbaren Lichts in Abhängigkeit von einem vorab festgelegten oder festlegbaren Kriterium einzustellen.

4. Vorrichtung (100) nach einem der vorhergehenden Ansprüche,
wobei die Vorrichtung (100) ein erstes Vorrichtungsteil (110) aufweist, welches die Energie-Umwandlungseinrichtung (50), insbesondere Elektronikbauteile der Energie-Umwandlungseinrichtung (50), zumindest teilweise aufnimmt,
und wobei die Vorrichtung (100) ein zweites Vorrichtungsteil (120), insbesondere eine Platine oder Folie, aufweist, welches die Antenne (10) zumindest teilweise aufnimmt.

5. Vorrichtung (100) nach einem der vorhergehenden Ansprüche,
wobei die Energie-Umwandlungseinrichtung (50) mindestens ein Elektronikbauteil, insbesondere mindestens eine Halbleiterdiode und/oder einen Transistor und/oder einen Kondensator aufweist.

6. Vorrichtung (100) nach einem der vorhergehenden Ansprüche,
wobei die Energie-Umwandlungseinrichtung (50) dazu ausgebildet ist, zumindest einen Teil der von der leitfähigen Struktur (20) zugeführten elektrischen Energie einer Ladeeinrichtung (250) zum Laden eines Energiespeichers zuzuführen, vorzugsweise einer Akkumulator-Ladeeinrichtung zum Laden des Akkumulators eines Mobilfunkgerätes (200).

7. Vorrichtung (100) nach einem der vorhergehenden Ansprüche,
wobei die Vorrichtung flächig ausgebildet ist und/oder eine adhäsive Schicht zum Befestigen an der Vorderseite des Mobilfunkgeräts (200) aufweist.

8. Mobilfunkgerät (200) mit einer Vorrichtung (100) nach einem der Ansprüche 1 bis 7,
wobei die Vorrichtung (200) an der Vorderseite (201) des Mobilfunkgeräts (100) angeordnet ist,
wobei insbesondere die Antenne (10) die Vorderseite (201) des Mobilfunkgeräts (200) im Wesentlichen vollständig bedeckt.

## Claims

1. Device (100) for shielding and converting energy of an electromagnetic field, comprising:
an antenna (10) for receiving HF energy from an electromagnetic field; and
an energy conversion device (50) electrically connected to the antenna (10) for converting the received HF energy,
wherein the antenna (10) of the device (100) is designed to be arranged on the front side of a mobile radio device,
wherein the antenna (10) has a conductive structure (20) with at least one first conductor track (21) and with at least one second conductor track (22), wherein the first conductor track (21) and the second conductor track (22) have at least one electrical interconnection point (23),
wherein the energy conversion device (50) is designed to convert at least part of the electrical energy supplied by the conductive structure (20) into heat and/or visible light.

2. Device (100) according to Claim 1,
wherein the energy conversion device (50) has a switching device which is designed to selectively carry out the following depending on a predefined or definable criterion:
a. convert at least a portion of the electrical energy supplied by the conductive structure (20) into heat and/or visible light;
b. supply at least a part of the electrical energy supplied by the conductive structure (20) to a charging device (250).

3. Device (100) according to claim 1 or 2,
wherein the energy conversion device (50) has a modulation device which is designed to adjust the intensity of the visible light depending on a predefined or definable criterion.

4. Device (100) according to any of the preceding claims,
wherein the device (100) has a first device part (110) which at least partially accommodates the energy conversion device (50), in particular electronic components of the energy conversion device (50),
and wherein the device (100) has a second device part (120), in particular a circuit board or foil, which at least partially accommodates the antenna (10).

5. Device (100) according to any of the preceding claims,
wherein the energy conversion device (50) has at least one electronic component, in particular at least one semiconductor diode and/or one transistor and/or one capacitor.

6. Device (100) according to any of the preceding claims,
wherein the energy conversion device (50) is designed to supply at least some of the electrical energy supplied by the conductive structure (20) to a charging device (250) for charging an energy store, preferably an rechargeable battery charging device for charging the rechargeable battery of a mobile radio device (200).

7. Device (100) according to any of the preceding claims,
wherein the device is designed planar and/or has an adhesive layer for fastening to the front side of the mobile radio device (200).

8. Mobile radio device (200) having a device (100) according to any of claims 1 to 7,
wherein the device (200) is arranged on the front side (201) of the mobile radio device (100),
wherein in particular the antenna (10) substantially covers the entire front side (201) of the mobile radio device (200).

## Revendications

1. Dispositif (100) d'isolation et de transformation de l'énergie d'un champ électromagnétique, comprenant :
une antenne (10) pour recevoir l'énergie RF d'un champ électromagnétique ; et
un dispositif de transformation de l'énergie (50) raccordé électriquement à l'antenne (10) pour convertir l'énergie RF reçue,
dans lequel l'antenne (10) du dispositif (100) est conçue pour être disposée à la face avant d'un appareil radiotéléphonique mobile,
dans lequel l'antenne (10) comporte une structure (20) conductrice dotée d'au moins une première piste conductrice (21) et d'au moins une seconde piste conductrice (22),
dans lequel la première piste conductrice (21) et la seconde piste conductrice (22) comportent au moins un point de raccordement (23) électrique,
dans lequel le dispositif de transformation de l'énergie (50) est conçu pour convertir au moins une partie de l'énergie électrique fournie par la structure (20) conductrice en chaleur et/ou en lumière visible.

2. Dispositif (100) selon la revendication 1,
dans lequel le dispositif de transformation de l'énergie (50) comporte un dispositif de commutation, lequel est conçu pour effectuer sélectivement, en fonction d'un critère prédéterminé ou définissable, les étapes suivantes :
a. la transformation d'au moins une partie de l'énergie électrique fournie par la structure (20) conductrice en chaleur et/ou en lumière visible ;
b. la fourniture d'au moins une partie de l'énergie électrique fournie par la structure (20) conductrice à un dispositif de charge (250).

3. Dispositif (100) selon la revendication 1 ou 2,
dans lequel le dispositif de transformation de l'énergie (50) comporte un dispositif de modulation, lequel est conçu pour régler l'intensité de la lumière visible en fonction d'un critère prédéterminé ou définissable.

4. Dispositif (100) selon l'une quelconque des revendications précédentes,
dans lequel le dispositif (100) comporte une première partie de dispositif (110), laquelle loge au moins partiellement le dispositif de transformation de l'énergie (50), en particulier des composants électroniques du dispositif de transformation de l'énergie (50),
et dans lequel le dispositif (100) comporte une seconde partie de dispositif (120), en particulier une carte de circuit imprimé ou une feuille, laquelle loge au moins partiellement l'antenne (10).

5. Dispositif (100) selon l'une quelconque des revendications précédentes,
dans lequel le dispositif de transformation de l'énergie (50) comporte au moins un composant électronique, en particulier au moins une diode semiconductrice et/ou un transistor et/ou un condensateur.

6. Dispositif (100) selon l'une quelconque des revendications précédentes,
dans lequel le dispositif de transformation de l'énergie (50) est conçu pour fournir au moins une partie de l'énergie électrique fournie par la structure (20) conductrice à un dispositif de charge (250) pour charger un accumulateur de l'énergie, de préférence un dispositif de charge accumulateur pour charger l'accumulateur d'un appareil radiotéléphonique mobile (200).

7. Dispositif (100) selon l'une quelconque des revendications précédentes,
dans lequel ledit dispositif est plan et/ou comporte une couche adhésive destinée à la fixation à la face avant du dispositif radiotéléphonique mobile (200).

8. Dispositif radiotéléphonique mobile (200) comprenant un dispositif (100) selon l'une quelconque des revendications 1 à 7,
dans lequel ledit dispositif (200) est disposé sur la face avant (201) du dispositif radiotéléphonique mobile (100),
dans lequel, en particulier l'antenne (10) recouvre essentiellement complètement la face avant (201) du dispositif radiotéléphonique mobile (200).
